(19) Europäisches Patentamt
European Patent Office
Office européen des brevets

(11) **EP 2 040 109 A1**

(12) **DEMANDE DE BREVET EUROPEEN**

(43) Date de publication:
**25.03.2009 Bulletin 2009/13**

(51) Int Cl.:
**G02F 1/11** *(2006.01)*

(21) Numéro de dépôt: **08290844.3**

(22) Date de dépôt: **05.09.2008**

(84) Etats contractants désignés:
**AT BE BG CH CY CZ DE DK EE ES FI FR GB GR
HR HU IE IS IT LI LT LU LV MC MT NL NO PL PT
RO SE SI SK TR**
Etats d'extension désignés:
**AL BA MK RS**

(30) Priorité: **24.09.2007 FR 0706683**

(71) Demandeur: **Fastlite**
**91194 Saint Aubin Cedex (FR)**

(72) Inventeur: **Tournois, Pierre**
**06800 Cagnes sur Mer (FR)**

(74) Mandataire: **de Saint-Palais, Arnaud Marie**
**Cabinet Moutard,**
**35, rue de la Paroisse**
**78000 Versailles (FR)**

(54) **Procédé et dispositif pour le filtrage acousto-optique programmable de haute resolution dans le domaine infrarouge**

(57) L'invention a pour objet un procédé de filtrage acousto-optique programmable de haute résolution dans le domaine infrarouge d'une onde optique incidente ($O_i$). Elle propose, à cet effet, l'utilisation d'un cristal acousto-optique biréfringent (TR) dont la vitesse de propagation des ondes acoustiques est faible, tels que des composés au Mercure, lequel cristal acousto-optique comprend, sur l'une de ses faces, un transducteur piézo-électrique (T) destiné à générer une onde acoustique transversale de vecteur d'onde (K) dont l'énergie se propage suivant un même axe ($\Delta$) mais en direction inverse de l'énergie de l'onde optique incidente ($O_i$), sachant que l'onde optique ($O_d$) résultant de l'interaction acousto-optique entre l'onde optique incidente ($O_i$) et l'onde acoustique de vecteur d'onde (K) est diffractée perpendiculairement ou quasi perpendiculairement à la direction de l'onde optique incidente ($O_i$).

FIG.6

**Description**

La présente invention concerne un procédé et un dispositif pour le filtrage acousto-optique programmable de haute résolution dans le domaine infrarouge.

Ce procédé s'applique notamment au filtrage acousto-optique programmable pour le domaine du moyen infrarouge allant d'une longueur d'onde $\lambda$ dans le vide de 5 à 20 $\mu$m.

La fenêtre de transparence du $TeO_2$, qui s'étend de 0,35 à 4,5 $\mu$m ne permet pas de développer un Filtre Acousto-optique Programmable (AOPDF) pour le domaine du moyen infrarouge allant de 5 à 20 $\mu$m, tel que celui décrit dans l'article publié dans la revue J.Phys.France 12 (2002) Pr. 69/75 : "Theory and Performance of the Acousto-Optic Programmable Dispersive Filter used for Femtosecond Laser Pulse Shaping".

D'une façon générale, on sait que les meilleurs matériaux pour une telle application sont les Composés au Mercure tel que : $Hg_2Cl_2$, $Hg_2Br_2$ et $Hg_2I_2$. Parmi ces matériaux, seul le Calomel ($Hg_2Cl_2$) est aujourd'hui susceptible d'exploitation industrielle.

Dans cette gamme de longueurs d'onde de 5 à 20 $\mu$m, le Calomel, qui est un cristal biréfringent uniaxe, n'est que peu dispersif. Son indice ordinaire $n_0$ est voisin de 1,898 et son indice extraordinaire $n_e$ sur l'axe [110] est voisin de 2,445. La vitesse de propagation des ondes acoustiques transversales est très lente sur l'axe [110] : $V_{110}$ = 347 m/s et est beaucoup plus rapide sur l'axe [001] : $V_{001}$ = 1084 m/s.

L'invention a pour objet un procédé de filtrage acousto-optique programmable de haute résolution dans le domaine infrarouge d'une onde optique incidente ; elle propose, à cet effet, l'utilisation d'un cristal acousto-optique biréfringent dont la vitesse de propagation des ondes acoustiques est faible, tels que des composés au Mercure, lequel cristal acousto-optique comprend sur l'une de ses faces, un transducteur piézo-électrique destiné à générer une onde acoustique transversale dont l'énergie se propage suivant un même axe mais en direction inverse de l'énergie de l'onde optique incidente, sachant que l'onde optique résultant de l'interaction acousto-optique entre ladite onde optique incidente et ladite onde acoustique, est diffractée perpendiculairement ou quasi perpendiculairement à la direction de ladite onde optique incidente.

D'une façon plus précise, l'interaction acousto-optique utilisée est telle que la direction des faisceaux optique ordinaire et acoustique, caractérisés par leurs directions de l'énergie définies par les vecteurs de Poynting, est identique. Les faisceaux sont co-linéaires en énergie afin de maximiser la longueur de l'interaction acousto-optique. Dans ces conditions, le coefficient acousto-optique efficace $p$ pour le Calomel est donné par :

$$p = -1/2\ (p_{11}-p_{12})\ .\ \sin\theta_0.\cos\theta_a + p_{44}.\cos\theta_0\ .\sin\theta_a \qquad \text{(relation 1)}$$

avec pour : $p_{11}$ = 0,551, $p_{12}$ = 0,44, $p_{44}$ à définir,
et avec :

$$\tan\theta_a = (V_{110}/V_{001})^2\ .\ \tan\theta_0 \qquad \text{(relation 2)}$$

et le facteur de mérite $M_2$, qui caractérise l'efficacité de diffraction par :

$$M_2 = n_0^3\ .\ [n_d(\theta_d)]^3.p^2 / \rho\ .[V(\theta_a)]^3 \qquad \text{(relation 3)}$$

Dans ces relations $\rho$ est la masse spécifique du Calomel égale à 7,19 g/cm$^3$, $\theta_0$ est l'angle que fait le vecteur d'onde optique ordinaire incident avec l'axe [110], $\theta_d$ l'angle que fait le vecteur d'onde optique extraordinaire diffracté avec l'axe [110], et $\theta_a$ l'angle que fait le vecteur d'onde acoustique avec l'axe [110]. Par ailleurs, $n_d(\theta_d)$ et $V(\theta_a)$ sont donnés par :

$$n_d(\theta_d) = n_0.\ n_e / [n_o^2\cos^2\theta_d + n_e^2\sin^2\theta_d]^{1/2} \qquad \text{(relation 4)}$$

$$V(\theta_a) = [V^2_{110} \cos^2\theta_a + V^2_{001} \sin^2\theta_a]^{1/2} \qquad \text{(relation 5)}$$

Dans le cas du Calomel, pour des longueurs d'onde optique comprises entre 5 et 20 $\mu$m, le facteur de mérite $M_2$ passe par un maximum pour $\theta_0 = 52°$ , $\theta_a = 7,47°$ et $p_{44} = 0$.

Ainsi, des filtres de fréquence ou de longueur d'onde optique, à haute résolution spectrale, peuvent être construits par diffraction acoustique du faisceau optique ordinaire incident selon un faisceau optique extraordinaire diffracté.

Un mode de mise en oeuvre du procédé selon l'invention sera décrit ci-après, à titre d'exemple non limitatif, avec référence aux dessins annexés dans lesquels :

La figure 1 est une représentation schématique des courbes de lenteur optiques et acoustique définissant la composition des vecteurs d'onde acoustique selon deux solutions dites "basses fréquences" et "hautes fréquences" ;

La figure 2 représente la variation du produit $(f.\lambda)$ en fonction de $\theta_0$ dans le cas de la solution dite "basses fréquences", $f$ étant la fréquence de l'onde acoustique ;

La figure 3 représente la variation du produit $(f.\lambda)$ en fonction de $\theta_0$ dans le cas de la solution dite "hautes fréquences" ;

La figure 4 représente les déviations angulaires $(\theta_d - \theta_0)$ en fonction de $\theta_0$ respectivement dans le cas de la solution dite "basses fréquences" et dans le cas de la solution dite "hautes fréquences" ;

La figure 5 représente la variation du facteur de mérite $M_2$ en fonction de $\theta_0$ pour des longueurs d'onde optique comprises entre 5 et 20 $\mu$m, pour les solutions dites "basses fréquences" et "hautes fréquences", et

La figure 6 est une représentation schématique d'une structure de Filtre Acousto-Optique Programmable pour le domaine infrarouge.

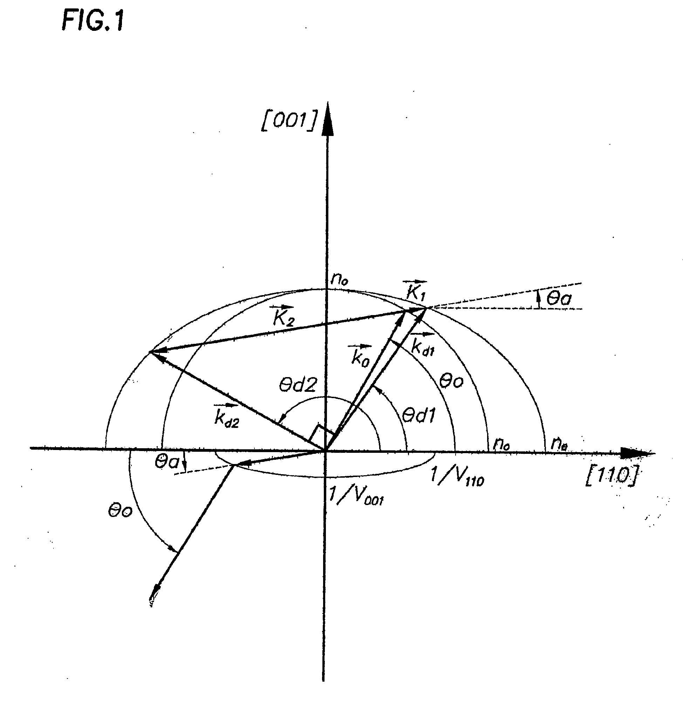

Dans l'exemple représenté sur la figure 1, la représentation schématique des courbes de lenteurs optiques (cadrans supérieurs) et de la courbe de lenteur acoustique (cadrans inférieurs) montre, dans le système orthonormé défini par les axes [110] et [001] du cristal biréfringent, que deux solutions sont possibles qui conduisent à des vecteurs d'onde acoustique $K = 2\pi f/ V(\theta_a)$ de longueurs très différentes et donc à des fréquences acoustiques $f$ très différentes.

Dans le domaine visible et proche infra rouge, où le matériau acousto-optique de choix est le $TeO_2$, seul le vecteur $K$ de petite longueur est exploitable car le vecteur de grande longueur correspond à des fréquences acoustiques très élevées qui sont absorbées dans le matériau.

Dans le domaine de l'infrarouge moyen, où le matériau de choix peut être le Calomel dont la vitesse de propagation acoustique est très lente, les deux solutions pour le vecteur $K$ sont exploitables.

Ces solutions sont les suivantes :

$$K_{1,2}/k_0 =$$

$$\{\pm[\cos(\theta_0-\theta_a)+2\delta\sin\theta_0\sin\theta_a]+(1+2\delta)^{1/2}.[\cos^2(\theta_0-\theta_a)+2\delta\sin^2\theta_a]^{1/2}\}/[1+2\delta\sin^2\theta_a]$$

$$\text{(relation 6)}$$

Avec :

$$k_0 = 2\pi\, n_0\, /\, \lambda,$$

$$2\delta = (n_e^2 - n_o^2)/n_o^2,$$

sachant que $2\delta$ est environ égal à 0,6595 pour le Calomel et des longueurs d'onde comprises entre 5 et 20 $\mu$m.

Les fréquences acoustiques sont alors données par :

$$f_{1,2} = [n_0 V(\theta_a)/\lambda].$$

$$\{\pm[\cos(\theta_0 - \theta_a) + 2\delta\sin\theta_0\sin\theta_a] + (1 + 2\delta)^{1/2}.[\cos^2(\theta_0 - \theta_a) + 2\delta\sin^2\theta_a]^{1/2}\}/[1 + 2\delta\sin^2\theta_a]$$

(relation 7)

Compte tenu de la relation d'alignement des énergies (relation 2) et de la valeur des vitesses acoustiques et des indices optiques du Calomel, le produit $(f.\lambda)$ est uniquement fonction de $\theta_0$.

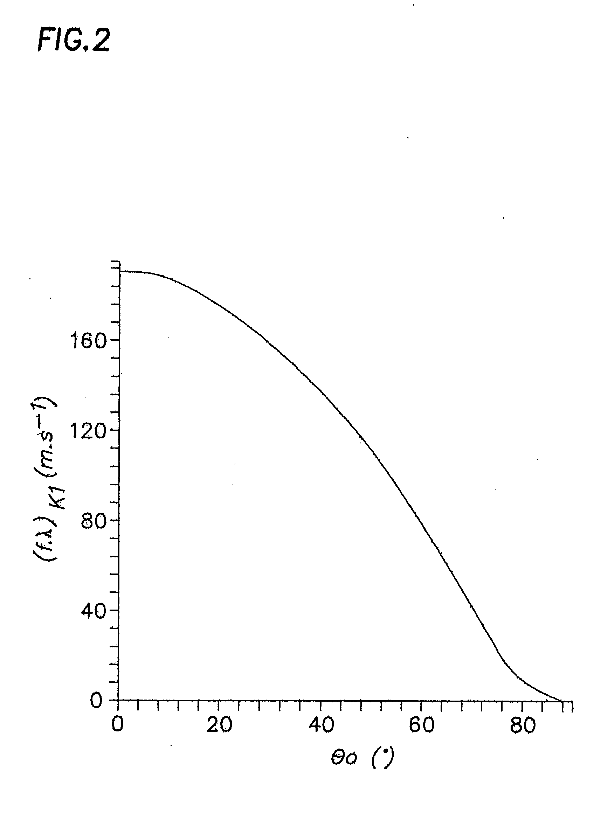

Dans l'exemple représenté sur la figure 2, la variation du produit $(f.\lambda)$ en fonction de $\theta_0$ dans le cas de la solution dite "basses fréquences", c'est-à-dire pour le plus petit des vecteurs K, indique, au maximum d'efficacité de diffraction ($\theta_0 = 52°$), un produit $(f.\lambda)$ de 103,22 m/s, soit des fréquences acoustiques comprises entre 5 et 20 MHz pour des longueurs d'onde optiques comprises entre 5 et 20 $\mu$m.

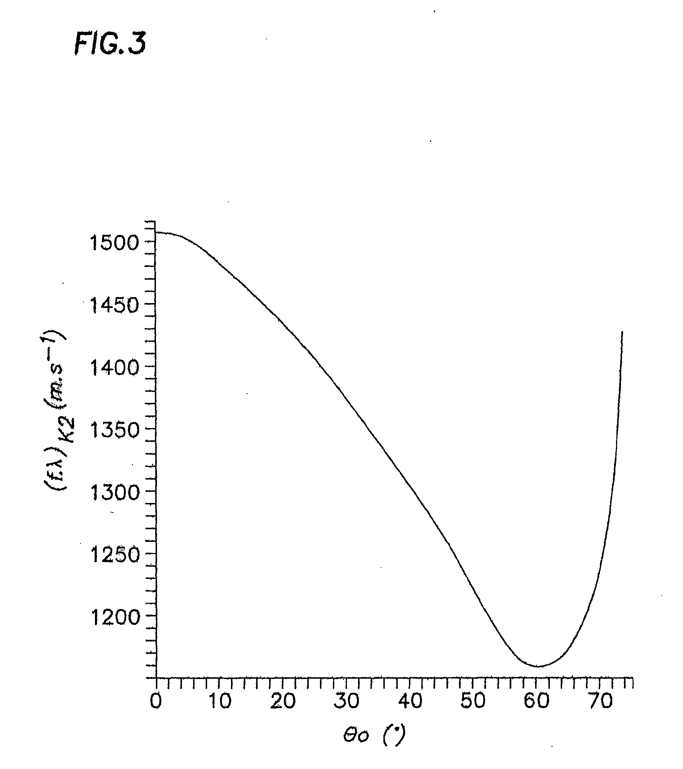

Dans l'exemple représenté sur la figure 3, la variation du produit $(f.\lambda)$ en fonction de $\theta_0$ dans le cas de la solution dite "hautes fréquences", c'est-à-dire pour le plus grand des vecteurs K, indique, au maximum d'efficacité de diffraction ($\theta_0 = 52°$), un produit $(f.\lambda)$ de 1192,65 m/s, soit des fréquences acoustiques comprises entre 60 et 240 MHz pour des longueurs d'onde optiques comprises entre 5 et 20 $\mu$m.

D'autre part, le produit $(f.\lambda)$ passe par un minimum proche de 1157,27 m/s pour $\theta_0 = 60,6°$, valeur pour laquelle le facteur de mérite $M_2$ ne décroît que de 6%.

Par ailleurs, l'angle $\theta_d$ que fait le vecteur d'onde optique extraordinaire diffracté avec l'axe [110] est donné par :

$$\tan\theta_d = [k_0\sin\theta_0 + K\sin\theta_a] / [k_0\cos\theta_0 + K\cos\theta_a]$$

(relation 8)

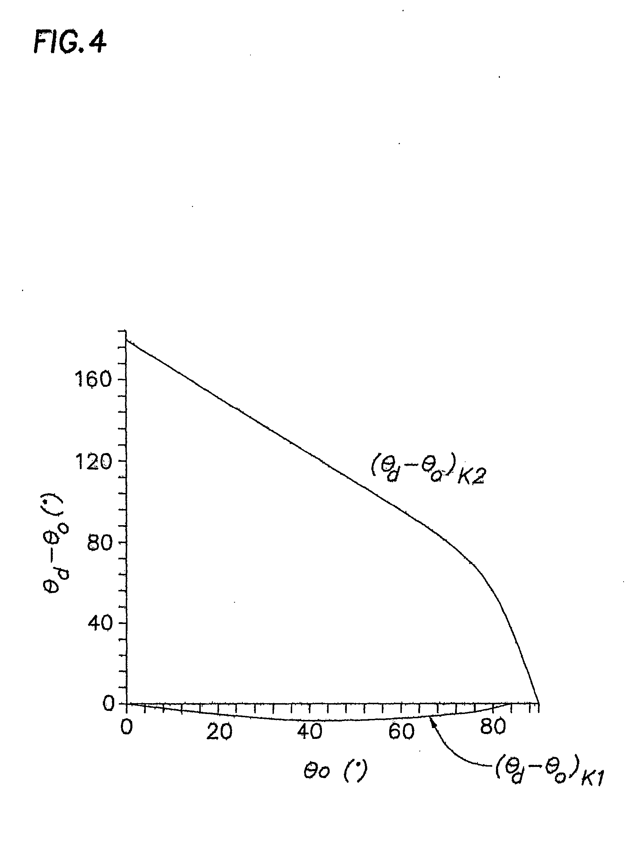

Dans l'exemple représenté sur la figure 4, les déviations angulaires $(\theta_d - \theta_0)$ en fonction de $\theta_0$ sont indiquées respectivement dans le cas de la solution dite "basses fréquences" (cadran inférieur) et dans le cas de la solution dite "hautes fréquences" (cadran supérieur), lorsque la condition d'alignement des énergies (relation 2) est appliquée.

D'autre part, la courbe concernant la solution dite "hautes fréquences" montre que la déviation angulaire $(\theta_d - \theta_0)$ est égale à 90° lorsque $\theta_0 = 60,46°$, une valeur qui est très proche de la valeur $\theta_0 = 60,6°$, qui correspond au minimum du produit $(f.\lambda)$.

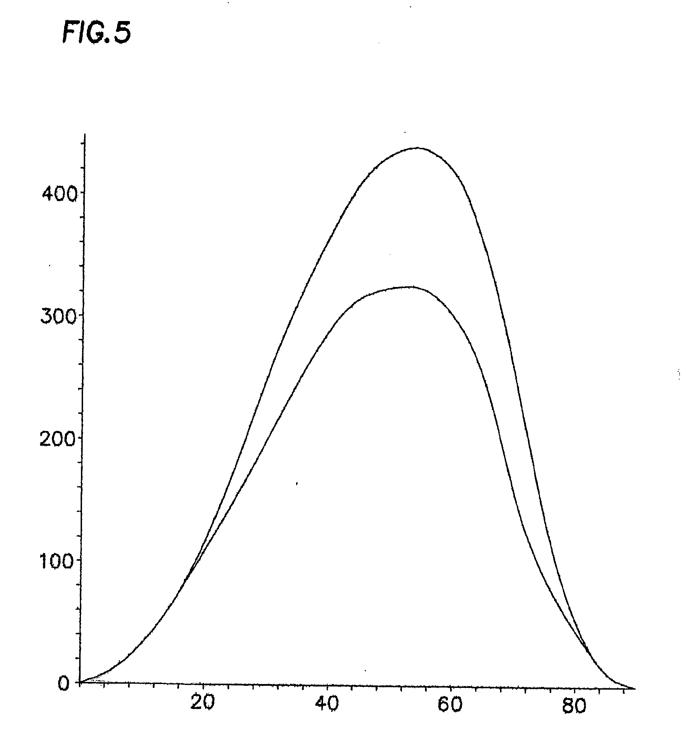

Dans l'exemple représenté sur la figure 5, la variation du facteur de mérite $M_2$ en fonction de $\theta_0$ pour des longueurs d'onde optique comprises entre 5 et 20 $\mu$m atteint un maximum de 300 mm²/GW pour la solution dite « basses fréquences » et 440 mm²/GW pour la solution dite « hautes fréquences », pour $\theta_0 = 52°$, ($\theta_a = 7,47°$) et $p_{44} = 0$.

Avantageusement, cette solution de déviation à 90° du faisceau optique extraordinaire diffracté permet la construction d'un filtre acousto-optique de très haute résolution dans le domaine de l'infrarouge.

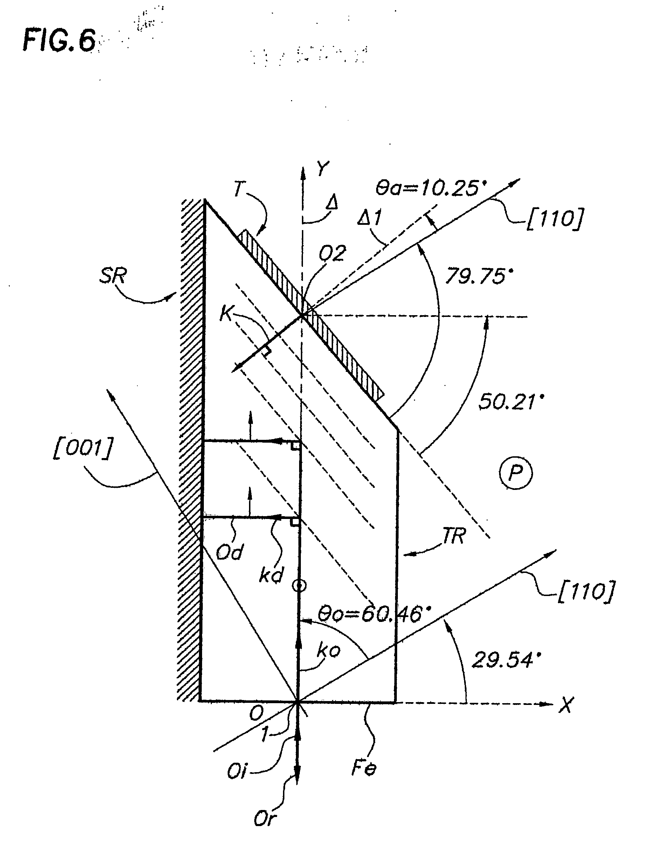

Dans l'exemple représenté sur la figure 6, une structure de Filtre Acousto-Optique Programmable pour le domaine infrarouge fait intervenir un cristal acousto-optique représenté de façon schématique par un trapèze rectangle TR, situé dans un plan P, et qui présente, sur le petit côté perpendiculaire à la base dudit trapèze rectangle TR, une face d'entrée Fe sur laquelle est appliqué en un point $0_1$, perpendiculairement à ladite face d'entrée Fe, un faisceau optique incident $O_i$, polarisé perpendiculairement au plan P contenant ledit trapèze rectangle TR ; le faisceau optique incident $O_i$ ainsi que le vecteur d'onde correspondant $k_o$ sont colinéaires avec un axe $\Delta$, passant par le point $0_1$ et par conséquent parallèles à la base dudit trapèze rectangle TR ; ledit axe $\Delta$ coupe le petit côté oblique à la base dudit trapèze rectangle au point $0_2$.

Un transducteur T, situé sur le petit côté oblique à la base dudit trapèze rectangle TR, génère un faisceau acoustique transverse, dont les vibrations sont perpendiculaires au plan P. Le vecteur d'onde correspondant K est par conséquent perpendiculaire au susdit petit côté oblique du trapèze rectangle TR.

Le plan P, étant orthonormé respectivement suivant $0_1x$ et $0_1y$, l'axe $0_1y$ contenant le susdit axe $\Delta$.

L'orientation du cristal acousto-optique est définie par ses deux axes [110] et [001] ; en terme de représentation schématique, les susdits axes [110] et [001] passent par le susdit point $0_1$.

Ainsi, compte tenu des éléments définis précédemment, l'axe $0_1y$ fait un angle $\theta_0$ de 60,46° avec l'axe [110], et la droite normale $\Delta_1$ au susdit petit côté oblique à la base du trapèze rectangle, passant par le point $0_2$, fait un angle $\theta_a$ de 10,25° avec l'axe [110] ; l'axe [001], passant par le point $0_1$, est bien entendu perpendiculaire à l'axe [110].

En d'autres termes, le vecteur d'onde optique ordinaire incident $k_o$ fait un angle $\theta_0$ de 60,46° avec l'axe [110], et le vecteur d'onde acoustique K fait un angle $\theta_a$ de 10,25° avec le même axe [110].

Dans ces conditions, l'énergie acoustique de l'onde transversale générée se propage dans le cristal, suivant la même direction que l'énergie de l'onde optique incidente, mais en sens opposé, selon le susdit axe $\Delta$.

Ainsi, pour un angle $\theta_0$ de 60,46° et un angle $\theta_a$ de 10,25°, la face du transducteur est donc inclinée de -79,75° par rapport à l'axe [110] et la face d'entrée de l'onde optique incidente est donc inclinée de -29,54° par rapport à l'axe [110].

Le faisceau optique incident $O_i$ sera diffracté suivant un faisceau optique extraordinaire $O_d$ dont le vecteur d'onde correspondant $k_d$ fait un angle proche de 90° avec le susdit vecteur d'onde $k_o$; ledit faisceau optique extraordinaire $O_d$ sera ensuite réfléchi par une surface réfléchissante SR située sur la base du trapèze rectangle TR, perpendiculaire au plan P ; ainsi le faisceau optique extraordinaire $O_d$ revient sur lui-même et est re-diffracté selon un faisceau optique ordinaire de retour Or selon un direction confondue ou proche dudit axe $\Delta$, c'est-à-dire selon une direction confondue ou proche de la direction dudit faisceau optique incident $O_i$.

Ainsi le susdit faisceau optique ordinaire de retour porte l'information de filtrage résultant de l'interaction acousto-optique effectuée dans le cristal biréfringent.

La résolution spectrale du filtre est telle que : $\delta\lambda / \lambda = \delta f / f$. La résolution en fréquence acoustique $\delta f$ dépend de la durée T de la fenêtre acoustique temporelle d'interaction dans le cristal. Pour un cristal de longueur L :

$$T = L \cos(\theta_0 - \theta a) / V(\theta a) \text{ et dans les conditions de la réflexion à 90° :}$$
$$\theta_0 = 60,46°\,, \theta_a = 10,25° \text{ et } V(\theta_a) = 392,2 \text{ m/s et donc } T = 16,3 \text{ } \mu\text{m/s}.$$

Pour un fenêtre temporelle rectangulaire, la fonction de résolution spectrale après la première diffraction et autour d'une fréquence $f_0$, est donnée par :

$$\sin[\pi.(f - f_0).T / [\pi.(f - f_0).T ] \qquad \text{(relation 9)}$$

Lors du retour inverse de la lumière, la fonction de résolution spectrale s'applique une seconde fois, de sorte que la fonction de résolution spectrale globale du filtre s'écrit :

$$\sin^2[\pi.(f - f_0).T / [\pi.(f - f_0).T ]^2 \qquad \text{(relation 10)}$$

Cette fonction présente une largeur à mi-hauteur voisine de : $\delta f = 0,88/T$.

La résolution spectrale en longueurs d'onde du filtre devient :

$$\delta\lambda / \lambda = 0,88 / f.T = 0,88 / N,$$

$N$ étant le nombre de longueurs d'onde acoustique contenues dans la longueur $L$ du cristal, soit, en tenant compte de la valeur du produit $(f.\lambda)$ et de la valeur de $V(\theta_a)$ :

$$\delta\lambda / \lambda^2 = 4,66.10^{-5} / L,$$

$L$ étant exprimée en ($cm$) et $\delta\lambda / \lambda^2$ en $(\mu m)^{-1}$. A titre d'exemple, pour une longueur de cristal de 2,5 cm et une longueur d'onde de 5 $\mu$m, la résolution $\delta\lambda$ est égale à 0,47 nm soit une résolution relative de l'ordre de 1/10000.

## Revendications

**1.** Procédé de filtrage acousto-optique programmable de haute résolution spectrale dans le domaine infrarouge d'une onde optique incidente ($O_i$) comprenant un cristal acousto-optique biréfringent (TR) dont la vitesse de propagation des ondes acoustiques est faible, tels que des composés au Mercure, lequel cristal acousto-optique comprend sur l'une de ses faces un transducteur piézo-électrique (T) destiné à générer une onde acoustique transversale de vecteur d'onde (K) dont l'énergie se propage suivant un même axe ($\Delta$) mais en direction inverse de l'énergie de ladite onde optique incidente ($O_i$),

**caractérisé en ce que** l'onde optique ($O_d$), résultant de l'interaction acousto-optique entre ladite onde optique incidente ($O_i$) et ladite onde acoustique de vecteur d'onde (K), est diffractée perpendiculairement ou quasi perpendiculairement à la direction de ladite onde optique incidente($O_i$).

**2.** Procédé selon la revendication 1,
**caractérisé en ce que** la susdite onde optique diffractée ($O_d$), est re-diffractée co-linéairement ou quasi co-linéairement à la direction de ladite onde optique incidente ($O_i$) après réflexion sur une surface réfléchissante (SR).

**3.** Procédé selon la revendication 1,
**caractérisé en ce que** le susdit cristal acousto-optique (TR) est du Calomel ($Hg_2Cl_2$), la direction de la susdite onde optique incidente ($O_i$) et de l'énergie de la susdite onde acoustique de vecteur d'onde (K), faisant un angle proche de 60° avec l'axe [110] dudit cristal acousto-optique (TR).

**4.** Dispositif pour la mise en oeuvre du procédé selon la revendication 1 destiné au filtrage acousto-optique programmable de haute résolution spectrale,
**caractérisé en ce que** la susdite surface réfléchissante (SR) est un miroir solidaire dudit cristal acousto-optique biréfringent.

**5.** Dispositif selon la revendication 4,
**caractérisé en ce que** le susdit transducteur piézo-électrique (T) destiné à générer une onde acoustique transversale est un transducteur placé sur une face du cristal acousto-optique biréfringent (TR) opposée à la face d'entrée ($F_e$) de la susdite onde optique incidente ($O_i$).

**6.** Dispositif selon la revendication 5,
**caractérisé en ce que** la normale ($\Delta_1$) au plan du susdit transducteur piézo-électrique (T) fait un angle proche de 10° avec l'axe [110] dudit cristal acousto-optique (TR).

FIG.1

FIG.2

FIG.3

FIG.4

FIG.5

FIG.6

Europäisches
Patentamt

European
Patent Office

Office européen
des brevets

# RAPPORT DE RECHERCHE EUROPEENNE

Numéro de la demande

EP 08 29 0844

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| P,X | PIERRE TOURNOIS ED - LISINETSKII V A ET AL: "Acousto-optic programmable filters in Mercury Halides for Mid-Infrared laser pulse shaping" LASERS AND ELECTRO-OPTICS, 2008. CLEO 2008. CONFERENCE ON, IEEE, PISCATAWAY, NJ, USA, 4 mai 2008 (2008-05-04), pages 1-2, XP031278772 ISBN: 978-1-55752-859-9 * le document en entier * ----- | 1-6 | INV. G02F1/11 |
| X | US 5 329 397 A (CHANG I-CHENG [US]) 12 juillet 1994 (1994-07-12) * colonne 3, ligne 50 - colonne 6, ligne 26; figure 1 * * tableau 1 * * colonne 8, ligne 5-11; revendication 6 * ----- | 1,3-6 | |
| X | VOLOSHINOV V B: "Elastic anisotropy of acousto-optic interaction medium" PROCEEDINGS OF THE SPIE - THE INTERNATIONAL SOCIETY FOR OPTICAL ENGINEERING SPIE-INT. SOC. OPT. ENG USA, vol. 4514, 2001, pages 8-19, XP002512999 ISSN: 0277-786X * pages 10-11, alinéa 2.2; figures 2-4 * * page 17, alinéa 4 * * pages 18-19, alinéas 5,6; figure 11.b * ----- -/-- | 1,3 | |

|  |  |  | DOMAINES TECHNIQUES RECHERCHES (IPC) |
|---|---|---|---|
|  |  |  | G02F |

Le présent rapport a été établi pour toutes les revendications

| Lieu de la recherche | Date d'achèvement de la recherche | Examinateur |
|---|---|---|
| Munich | 2 février 2009 | Cossu, Alessandro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................................

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 08 29 0844

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | VOLOSHINOV V ET AL: "Diffraction of light by ultrasound in acoustically anisotropic medium" PROCEEDINGS OF THE SPIE - THE INTERNATIONAL SOCIETY FOR OPTICAL ENGINEERING SPIE-INT. SOC. OPT. ENG USA, vol. 3581, 1998, pages 108-117, XP002513000 ISSN: 0277-786X * page 108 * * page 114 * * page 116; figure 7b * ----- | 1,3 | |
| A | POLIKARPOVA N V ET AL: "Intensity of reflected acoustic waves in acousto-optic crystal tellurium dioxide" PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 5828, no. 1, 3 mars 2005 (2005-03-03), pages 25-36, XP002513001 ISSN: 0277-786X * page 26; figure 1 * * page 29 * * pages 33-35; figures 13-15 * ----- | 2 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 2 février 2009 | Cossu, Alessandro |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    .................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 08 29 0844

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-02-2009

| Document brevet cité<br>au rapport de recherche | Date de<br>publication | Membre(s) de la<br>famille de brevet(s) | Date de<br>publication |
|---|---|---|---|
| US 5329397            A | 12-07-1994 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *J.Phys.France,* 2002, vol. 12